# EUROPEAN PATENT SPECIFICATION

(11) **EP 2 020 642 B1**
(45) Date of publication and mention of the grant of the patent: **19.12.2012**
(21) Application number: 07740602.3
(22) Date of filing: 30.03.2007
(51) Int. Cl.: G08B 13/24, G06K 19/077

(54) **ELECTRONIC TAG**
ELEKTRONISCHES ETIKETT
ETIQUETTE ELECTRONIQUE

(30) Priority: 31.03.2006 JP 2006098431
(43) Date of publication of application: 04.02.2009
(73) Proprietor: Hitachi Chemical Co., Ltd., Shinjuku-ku, Tokyo 163-0449 (JP); Hitachi, Ltd., Chiyoda-ku Tokyo 100-8280 (JP)
(72) Inventor: MASUDA, Hisayo, Ibaraki 308-8524 (JP); TASAKI, Kouji, Ibaraki 308-8524 (JP); KANDOU, Hidehiko, Tokyo 185-8601 (JP)
(74) Representative: HOFFMANN EITLE
(86) International application number: PCT/JP2007/057166
(87) International publication number: WO 2007/116829

(56) References cited:
- EP-A- 1 326 219
- WO-A-98/13804
- WO-A-2004/090843
- JP-A- 2003 076 963
- JP-A- 2003 223 622
- JP-A- 2004 227 508
- US-A1- 2005 162 278

## Description

### Technical Field

The present invention relates to an electronic tag incorporating in one body a noncontact IC tag and a magnetic tag and more specifically, the present invention relates to an electronic tag providing functionality for both individual identification and antitheft.

In recent years the focus of noncontact, individual identification systems using noncontact IC tags has been on systems used for managing the entire lifecycle of a product including everything from production, distribution, sales and recycling. In the case of radio wave type noncontact IC tags using microwaves or UHF waves there has been great interest in configurations in which an external antenna is attached to an IC chip enabling transmission over a distance of several meters. Presently, construction of systems to realize distribution of high volume products, production history information management and security management and the like is ongoing.

In the case of magnetic type tags, these utilize the effect that a magnetic body exerts on an electromagnetic field to prevent the illicit removal of products from a store for example. These magnetic type tags are used in coordination with systems that generate an electromagnetic field and utilize a gate for electromagnetic detection. Such systems do not provide functionality for individual identification of each individual product item however, and so they are really just systems for preventing the illicit removal of products from a store and cannot be used for detailed product management such as inventory and the like. In order to realize both theft prevention and product management using electronic tags it is possible to attach both a magnetic tag and a noncontact IC tag to a product but using both these tags incurs expenses and attaching them is troublesome.

An electronic tag that provides both antitheft and product management functionality has been devised in Japanese Unexamined Patent Application Publication No. 2004-4227508. The configuration of this electronic tag has a soft magnetic body film layer formed on a case tag body housing a wireless IC chip, and an antenna provided by attaching a suspended holding cord incorporating metallic wire comprised of a soft magnetic body. This electronic tag has the film layer soft magnetic body and the wireless chip packed shifted inside the same case and the suspended holding cord and it is attached to the outside of a product.

Depending on the kind of product however, it may be necessary to provide a configuration in which an electronic tag is formed as an integrated body with the product itself. For example, for a product such as documents, CDs or DVDs or the like, an electronic tag must be attached to the narrow surface of the case or the spine in order to enable confirmation of inventory of items when they are arranged lined up on a shelf for example.

In this situation an electronic tag must be fine and thin in form, and must be small in order to realize low cost.

Document US 2005/0162278 A1 discloses an electronic tag according to the preamble of claim 1.

### Disclosure of the Invention

With the foregoing in view, the present invention provides an electronic tag that has both an antitheft function and a merchandise control function, reduces the trouble associated with attaching the tag to a body and furthermore is thin and low-cost.

In order to solve the above described problems, the electronic tag related to the present invention comprises a noncontact IC tag further comprising a transmitting/receiving antenna and an IC chip having information for individual identification, as well as a magnetic tag, with the noncontact IC tag and the magnetic tag being placed one over another by having an insulating layer at least partially in between. The transmitting/receiving antenna has an excitation slit that provides impedance matching to the IC chip, and the excitation slit is disposed so that the excitation slit does not overlap with the magnetic tag.

It is preferable in the electronic tag, that the magnetic part of the magnetic tag is electrically conductive in the radio wave frequency used by the noncontact IC tag.

It is preferable in the electronic tag, that the transmitting/receiving antenna of the noncontact IC tag be comprised of a non-magnetic material.

It is preferable in the electronic tag, that the transmitting/receiving antenna of the noncontact IC tag includes aluminum or copper.

It is preferable in the electronic tag, that the length of the magnetic part of the magnetic tag be greater than the length of the transmitting/receiving antenna of the noncontact IC tag.

It is preferable in the electronic tag, that the distance between the center of the noncontact IC tag and one of the ends of the magnetic tag be within a range from 20 mm to 50 mm.

It is preferable in the electronic tag, that the operating frequency of the noncontact IC tag be not less than 400 MHz.

It is preferable in the electronic tag, that the length of the noncontact IC tag be not greater than 30 mm.

It is preferable in the electronic tag, that the individual identifying information of the chip of the noncontact IC tag is configured in ROM.

The electronic tag related to the present invention comprises a noncontact IC tag further comprising a transmitting/receiving antenna and a wireless transmitting IC chip, as well as a magnetic tag, the electronic tag has both an antitheft function and a merchandise control function, it reduces the trouble associated with attaching the tag to a body and furthermore is thin and low-cost.

### Brief Description of the Drawings

In Fig. 1, 1(a) is a plan view showing an example of an embodiment of an electronic tag according to the present invention and Fig. 1(b) is a cross-sectional view of the example of the embodiment of the electronic tag according to the present invention;
In Fig. 2, 2(a) is a plan view showing an example of an embodiment of a noncontact IC tag, and Fig. 2 (b) is a plan view showing an example of an embodiment of a noncontact IC tag;
Fig. 3 is a cross-sectional view showing the distance between the center of a noncontact IC tag and one end of a magnetic tag; and
Fig. 4 is a graph showing the relationship between the center of a noncontact IC tag used in the electronic tag according to the present invention and its distance to one end of the magnetic tag and the maximum transmission distance with the noncontact IC tag.

### Best Mode for Carrying Out the Invention

An embodiment of the present invention will now be described with reference to the drawings. The described exemplary embodiment is intended to assist in the understanding of the invention, and is not intended to limit the scope of the invention in any way.

Fig. shows an example of an embodiment of an electronic tag according to the present invention.

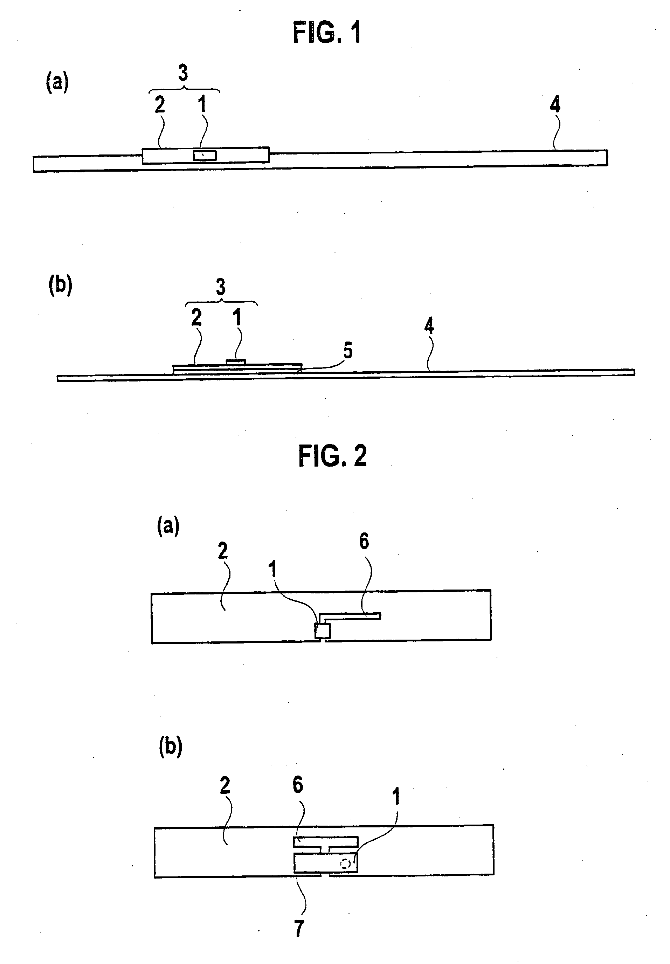

Fig. 1 (a) provides a plan view of the electronic tag and Fig. 1 (b) provides a cross-sectional view of the tag. This electronic tag according to the present invention is structured having a noncontact IC tag 3 comprising a wireless transmitting IC chip 1 and a transmitting/receiving antenna 2 electrically connected to the IC chip 1, laid one over the other on a magnetic tag 4 via an adhesive layer 5.

Fig. 2 shows an example of a noncontact IC tag suitable to the present invention.

Fig. 2 (a) and 2 (b) show a radio wave type noncontact IC tag that uses 2.45 GHz microwaves. A radio wave type noncontact IC tag that utilizes microwaves not less than 400 MHz can provide suitable transmission characteristics by using a dipolar antenna in which the antenna is a long pole shape, thereby enabling a thin form tag to be realized. In the case of an electromagnetic conductive type noncontact IC tag having an operating frequency of 13.56 MHz the antenna is coil shaped, thus the tag becomes a planar form occupying some area. Accordingly, the operating frequency of the noncontact IC tag used in the present invention should preferably be not less than 400 MHz.

The noncontact IC tag used in the electronic tag according to the present invention is a radio wave type noncontact IC tag, and as shown in Fig. 2, in the transmitting/receiving antenna substrate an L-shaped or T-shaped excitation slit 6 is formed that facilitates impedance matching with the IC chip and obtains a suitable transmission distance. In the electronic tag according to the present invention, this excitation slit 6 does not overlap with the magnetic tag. That is to say, as shown in Table 1, with some specific L-shaped or T-shaped slits, if the excitation slit overlaps with the magnetic tag impedance matching may not be achieved leading to a deterioration in the transmission performance of the noncontact IC tag. Except in cases where the excitation slit is designed paying consideration to overlap with the magnetic tag this kind of deteriorating transmission performance of the noncontact IC tag due to overlapping of the excitation slits with the magnetic tag occurs easily.

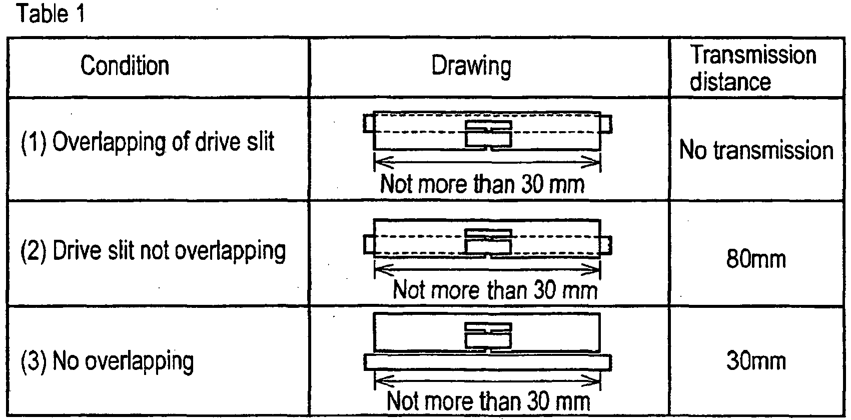

Further, there are cases in which there is a deterioration in transmission performance even when the transmitting/receiving antenna of the noncontact IC tag and the magnetic tag do not overlap such that a configuration in which the noncontact IC tag and magnetic tag do overlap is preferable. In the electronic tag according to the present invention, the magnetic tag is used as a booster antenna of the noncontact IC tag. A booster antenna is an auxiliary antenna designed to improve the transmission performance of the noncontact IC tag.

Generally, in a radio wave type, noncontact IC tag in which the transmitting/receiving antenna substrate is not more than 30 mm long, independently, transmission performance will be poor and the read capabilities unstable. In the case of the present invention however, the noncontact IC tag and magnetic tag are placed one on top of another via an insulating layer so that when a high frequency is applied there is electromagnetic coupling between the transmitting/receiving antenna of the noncontact IC tag and the magnetic tag, the magnetic tag can be utilized as a booster antenna of the noncontact IC tag, thereby enabling improved transmission distance. In this way, as the magnetic tag is used as a booster antenna it becomes possible to realize both a small form noncontact IC tag and low-cost. By economizing on material resources, it also becomes possible to reduce the energy consumed in producing the materials and processing. These points contribute to a reduction in the environmental burden (e.g. volume of CO2 emissions) from production, right through to usage and disposal.

The effects of this kind of booster antenna are sufficient when part of the transmitting/receiving antenna of the noncontact IC tag and part of the magnetic portion of the magnetic tag are overlapping, but the effectiveness of the booster antenna can be further enhanced as follows.

- The magnetic part of the magnetic tag is electrically conductive in the frequency band of the radio waves used by the noncontact IC tag, thus allowing the magnetic part to operate effectively as an antenna or a booster.

- The length of the magnetic part of the magnetic tag is greater than the length of the antenna of the noncontact IC tag.

This allows the effects of the booster to be enhanced. (However, it is also possible to devise an efficient antenna that is short, so it may be that the shorter length of the magnetic part is not crucial.)

Further, deteriorated performance of the magnetic tag due to the noncontact IC tag can be prevented as follows.

- The transmitting/receiving antenna of the noncontact IC tag is made of nonmagnetic materials. This means that the noncontact IC tag does not exert any detrimental effects magnetically.

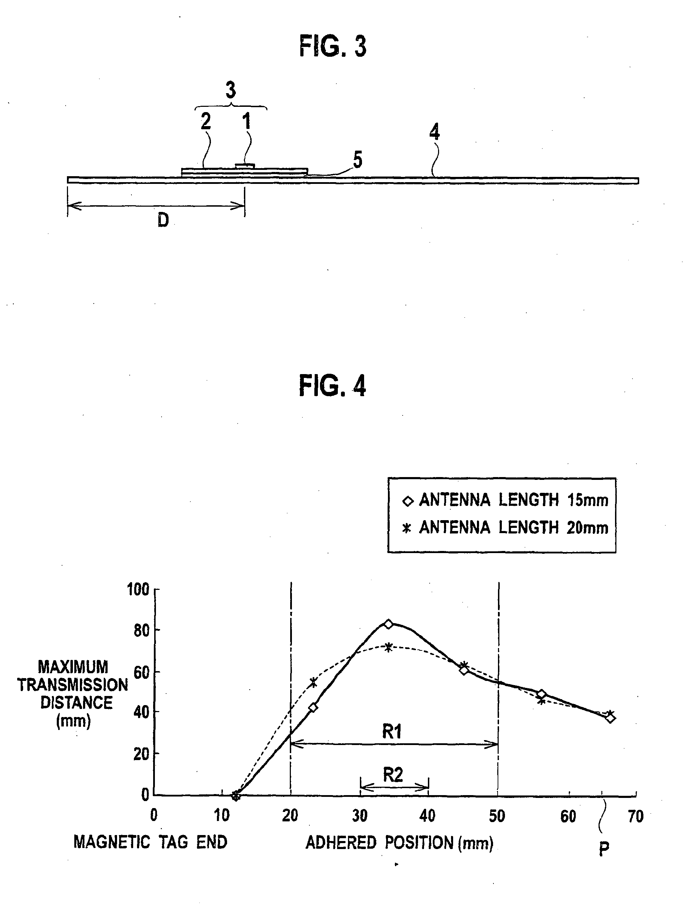

When the operating frequency of the noncontact IC tag is 2.45 GHz, the positioning of the noncontact IC tag and the magnetic tag should be such that the center of the noncontact IC tag is at a distance from one end of the magnetic tag within a range of 20 mm-50 mm. Fig. 3 is an explanatory drawing indicating the positioning of the noncontact IC tag and the magnetic tag. Fig. 4 shows the relationship between the positioning of these two and the maximum transmission distance. Here, in Fig. 3, the distance D is the distance between the center of the noncontact IC tag and the end of the magnetic tag. Further, Fig. 4 shows suitable range R1 and especially suitable range R2. When the distance between the center of the noncontact IC tag and one end of the magnetic tag is between 30 mm-40 mm the most satisfactory performance is obtained so this is pertinent to the positioning of these two.

The transmitting/receiving antenna of the noncontact IC tag used in the electronic tag according to the present invention can be of a metal including either aluminum or copper. Such a metal is economical and subjects well to etching processes and thus is the usual suitable material used for an antenna furnishing the required properties.

The wireless transmitting chip used in the electronic tag according to the present invention should preferably be realized by individual identifying information configured in ROM. When an individual ID only, is configured in ROM for a wireless transmission IC chip, this individual ID can be managed over a network. Not only is this a cheap and compact solution, it realizes an IC chip having an IC that cannot be tampered with. Such an IC chip is both low-cost and very convenient and easy to use, thus employing a chip such as this in the present invention further enhances the capabilities of the invention.

The electronic tag according to the present invention comprised of a magnetic tag and a noncontact IC tag comprising a transmitting/receiving antenna and a wireless transmission IC chip provides both antitheft and merchandise control functionality, it reduces the trouble associated with attaching the tag to a body and furthermore, is thin and low-cost.

An embodiment of the invention will now be described, it being understood that this is intended to assist the understanding of the invention, and is not intended to limit the scope of the invention in any way.

### Embodiment

A noncontact IC tag having an antenna 15 mm in length of the form as shown in Fig. 2 (b) was assembled. A µ-Chip sold by Hitachi, Ltd. was used for the IC chip. This noncontact IC tag was adhered, via tape 0.17 mm thick having adhesive on both sides thereof of a kind generally sold in the market, such that the center of the noncontact IC tag was at a distance of 35 mm from one end of a magnetic tag, 130 mm in length. Here, the positioning was such that the stimulation slit of the noncontact IC tag did not overlap with the magnetic tag. This electronic tag was 4 mm wide.

The above described electronic tag was adhered using adhesive tape to the spine of a book 1 cm thick. An IC tag reader (MRJ300, output 300mW by Hitachi Kokusai Electric Inc.) and an antenna were used (linear polarization type 1 patch antenna, PA1-2450ASA, by Hitachi Kokusai Electric Inc.) and the transmission distance was measured. The result was a transmission distance of 80 mm. Further, when the book with electronic tag attached was passed through a magnetic detection gate (90 cm wide), it was detected.

## Claims

1. An electronic tag comprising:
a noncontact IC tag(3) further comprising a transmitting/receiving antenna (2) and an IC chip (1) having information for individual identification; and
a magnetic tag (4);
wherein the noncontact IC tag and the magnetic tag are placed one over another having an insulating layer (5) at least partially in between,
**characterized in that**
the transmitting/receiving antenna (2) has an excitation slit (6) that provides impedance matching to the IC chip, and
the excitation slit (6) is disposed so that the excitation slit does not overlap with the magnetic tag (4).

2. The electronic tag according to claim 1 wherein the magnetic part of the magnetic tag (4) is electrically conductive in the radio wave frequency used by the noncontact IC tag (3).

3. The electronic tag according to either claim 1 or claim 2 wherein the transmitting/receiving antenna (2) of the noncontact IC tag (3) is comprised of a non-magnetic material.

4. The electronic tag according to any of claims 1 through 3 wherein the transmitting/receiving antenna (2) of the noncontact IC tag (3) includes aluminum or copper.

5. The electronic tag according to any of claims 1 through 4 wherein the length of the magnetic part of the magnetic tag (4) is greater than the length of the transmitting/receiving antenna (2) of the noncontact IC tag (3).

6. The electronic tag according to any of claims 1 through 5 wherein the distance between the center of the noncontact IC tag (3) and one of the ends of the magnetic tag (4) is within a range from 20 mm to 50 mm.

7. The electronic tag according to any of claims 1 through 6 wherein the operating frequency of the noncontact IC tag (3) is not less than 400 MHz.

8. The electronic tag according to any of claims 1 through 7 wherein the length of the noncontact IC tag (3) is not greater than 30 mm.

9. The electronic tag according to any of claims 1 through 8 wherein the individual identifying information of the chip (1) of the noncontact IC tag (3) is configured in ROM.

## Patentansprüche

1. Elektronisches Etikett, aufweisend:
ein nicht kontaktierendes IC-Etikett (3) ferner aufweisend eine Übertragungs-/Empfangs-Antenne (2) und einen IC-Chip (1) mit einer Information zur individuellen Identifizierung; und
ein magnetisches Etikett (4);
wobei das nicht kontaktierende IC-Etikett und das magnetische Etikett übereinander mit einer zumindest teilweise dazwischenliegenden Isolierschicht (5) angeordnet sind,
**dadurch gekennzeichnet, dass**
die Übertragungs-/Empfangs-Antenne (2) einen Anregungsschlitz (6) aufweist, der eine Impedanz passend zu dem ID-Chip aufweist, und
der Anregungsschlitz (6) angeordnet ist, sodass der Anregungsschlitz das magnetische Etikett (4) nicht überlappt.

2. Elektronisches Etikett nach Anspruch 1, bei dem der magnetische Teil des magnetischen Etiketts (4) elektrisch leitend bei der Radiowellenfrequenz ist, die von dem nicht kontaktierenden IC-Etikett 3 verwendet wird.

3. Elektronisches Etikett nach Anspruch 1 oder 2, bei dem die Übertragungs-/Empfangs-Antenne (2) des nicht kontaktierenden IC-Etiketts (3) ein nicht magnetisches Material umfasst.

4. Elektronisches Etikett nach einem der Ansprüche 1 bis 3, bei dem die Übertragungs-/Empfangs-Antenne (2) des nicht kontaktierenden IC-Etiketts (3) Aluminium oder Kupfer umfasst.

5. Elektronisches Etikett nach einem der Ansprüche 1 bis 4, bei dem die Länge des magnetischen Abschnitts des magnetischen Etiketts (4) größer als die Länge der Übertragungs-/Empfangs-Antenne (2) des nicht kontaktierenden IC-Etiketts (3) ist.

6. Elektronisches Etikett nach einem der Ansprüche 1 bis 5, bei dem der Abstand zwischen dem Zentrum des nicht kontaktierenden IC-Etiketts (3) und einem der Enden des magnetischen Etiketts (4) sich in einem Bereich von 20 mm bis 50 mm befindet.

7. Elektronisches Etikett nach einem der Ansprüche 1 bis 6, bei dem die Betriebsfrequenz des nicht kontaktierenden IC-Etiketts (3) nicht weniger als 400 MHz beträgt.

8. Elektronisches Etikett nach einem der Ansprüche 1 bis 7, bei dem die Länge des nicht kontaktierenden IC-Etiketts (3) nicht größer als 30 mm ist.

9. Elektronisches Etikett nach einem der Ansprüche 1 bis 8, bei dem die individuelle Identifizierungsinformation des Chips (1) des nicht kontaktierenden IC-Etiketts (3) im ROM konfiguriert ist.

## Revendications

1. Etiquette électronique comprenant :
une étiquette à CI sans contact (3) comprenant en outre une antenne d'émission/de réception (2) et une puce à CI (1) contenant des informations destinées à une identification individuelle ; et
une étiquette magnétique (4) ;
dans laquelle l'étiquette à CI sans contact et l'étiquette magnétique sont placées l'une sur l'autre, une couche isolante (5) étant au moins partiellement disposée entre elles,
**caractérisée en ce que**
l'antenne d'émission/de réception (2) présente une fente d'excitation (6) qui fournit une adaptation d'impédance à la puce à CI, et
la fente d'excitation (6) est disposée de telle sorte que la fente d'excitation ne chevauche pas l'étiquette magnétique (4).

2. Etiquette électronique selon la revendication 1, dans laquelle la partie magnétique de l'étiquette magnétique (4) est électroconductrice dans la fréquence d'onde radioélectrique utilisée par l'étiquette à CI sans contact (3).

3. Etiquette électronique selon l'une ou l'autre de la revendication 1 ou de la revendication 2, dans laquelle l'antenne d'émission/de réception (2) de l'étiquette à CI sans contact (3) est constituée d'un matériau non magnétique.

4. Etiquette électronique selon l'une quelconque des revendications 1 à 3, dans laquelle l'antenne d'émission/de réception (2) de l'étiquette à CI sans contact (3) comprend de l'aluminium ou du cuivre.

5. Etiquette électronique selon l'une quelconque des revendications 1 à 4, dans laquelle la longueur de la partie magnétique de l'étiquette magnétique (4) est supérieure à la longueur de l'antenne d'émission/de réception (2) de l'étiquette à CI sans contact (3).

6. Etiquette électronique selon l'une quelconque des revendications 1 à 5, dans laquelle la distance entre le centre de l'étiquette à CI sans contact (3) et une des extrémités de l'étiquette magnétique (4) se trouve dans une plage de 20 mm à 50 mm.

7. Etiquette électronique selon l'une quelconque des revendications 1 à 6, dans laquelle la fréquence de fonctionnement de l'étiquette à CI sans contact (3) n'est pas inférieure à 400 MHz.

8. Etiquette électronique selon l'une quelconque des revendications 1 à 7, dans laquelle la longueur de l'étiquette à CI sans contact (3) n'est pas supérieure à 30 mm.

9. Etiquette électronique selon l'une quelconque des revendications 1 à 8, dans laquelle les informations d'identification individuelle de la puce (1) de l'étiquette à CI sans contact (3) sont configurées dans une mémoire morte.
